# EUROPÄISCHE PATENTSCHRIFT

(11) **EP 1 038 719 B1**
(45) Veröffentlichungstag und Bekanntmachung des Hinweises auf die Patenterteilung: **02.07.2003**
(21) Anmeldenummer: 00103186.3
(22) Anmeldetag: 17.02.2000
(51) Int. Cl.: B60K 25/02, F02N 11/04

(54) **Anordnung und antriebsmässige Anbindung wenigstens eines Anlassers/Generators an einer Brennkraftmaschine**
Starter/generator drive arrangement and attachment to an internal combustion engine
Agencement pour l'entraînement d'un démarreur/alternateur et montage sur le moteur à combustion interne

(30) Priorität: 17.03.1999 DE 19911925
(43) Veröffentlichungstag der Anmeldung: 27.09.2000
(73) Patentinhaber: MAN Nutzfahrzeuge Aktiengesellschaft, 80976 München (DE)
(72) Erfinder: Rühmann, Gerd, Dipl.-Ing., 82229 Seefeld (DE)

(56) Entgegenhaltungen:
- EP-A- 0 384 808
- DE-A- 19 745 997
- DE-A- 19 748 423
- US-A- 4 862 009

## Beschreibung

Die Erfindung betrifft eine Anordnung und antriebsmäßige Anbindung wenigstens eines Anlassers/Generators an einer Brennkraftmaschine, insbesondere Dieselmotor in einem Lastkraftwagen oder Omnibus, wie aus der DE 19 748 423 bekannt.

In der Regel werden der Anlasser und Generator, aber auch andere Nebenaggregate wie Luftpresser, Lenkhilfepumpe, Wasserpumpe, Klimakompressor, gegebenenfalls auch eine hydrostatische Pumpe/Maschine für Arbeitsgeräte-/ Plattformbetätigung jeweils einzeln außen an verschiedenen Stellen einer Brennkraftmaschine angeordnet. Dies bedeutet jeweils eigene Befestigungsvorrichtungen und/oder Vorkehrungen für ihre Befestigung an der Brennkraftmaschine. Auch die antriebsmäßige Anbindung dieser Nebenaggregate an die Kurbelwelle und/oder die Nockenwelle(n) oder das Schwungrad der Brennkraftmaschine gestaltet sich in der Regel sehr schwierig und wegen der räumlich verteilten Anordnung der Nebenaggregate auch als sehr aufwendig und teuer. Außerdem erfordert diese verteilte Anordnung der Nebenaggregate einschließlich der zu ihnen hinführenden Antriebsstränge relativ viel Bauraum, was z. B. bei Brennkraftmaschinen, die in Frontlenker-Lastkraftwagen unterhalb des Fahrerhauses oder in Omnibussen unterhalb der Rücksitzbank eingebaut werden müssen, nicht sehr günstig ist, weil es die Gestaltungsfreiheit im Umfeld der Brennkraftmaschine im Hinblick auf die Unterbringung anderer Aggregate, wie Kühler, Lüfter, Turbolader und dergleichen erheblich einschränkt.

Es ist daher Aufgabe der Erfindung, für den Anlasser/Generator, gegebenenfalls auch weitere anzutreibende Nebenaggregate eine solche Anordnung und antriebsmäßige Anbindung an die Brennkraftmaschine zu schaffen, die extrem platzsparend ist und eine einfache Montage ermöglicht.

Diese Aufgabe ist erfindungsgemäß durch die im Anspruch 1 gekennzeichneten Maßnahmen gelöst.

Vorteilhafte Ausgestaltungen und Weiterbildungen dieser Lösung sind in den Unteransprüchen gekennzeichnet.

Durch die erfindungsgemäße Zusammenfassung einer sowohl als Anlasser als auch als Generator, gegebenenfalls auch als Antriebsquelle für andere Nebenaggregate fungierenden Elektromaschine und eines Planetengetriebes mit zwei Freilaufkupplungen sowie eines die Verbindung zur Kurbelwelle herstellenden Zahnradtriebes in einem Modulgehäuse ergibt sich eine bisher in Verbindung mit solchen Bauteilen noch nicht erreichte Kompaktheit und zugleich größtmögliche Platzersparnis. Einher geht damit auch eine nennenswerte Kostenersparnis, weil die Modulteile beim Zusammenbau gut handhabbar sind.

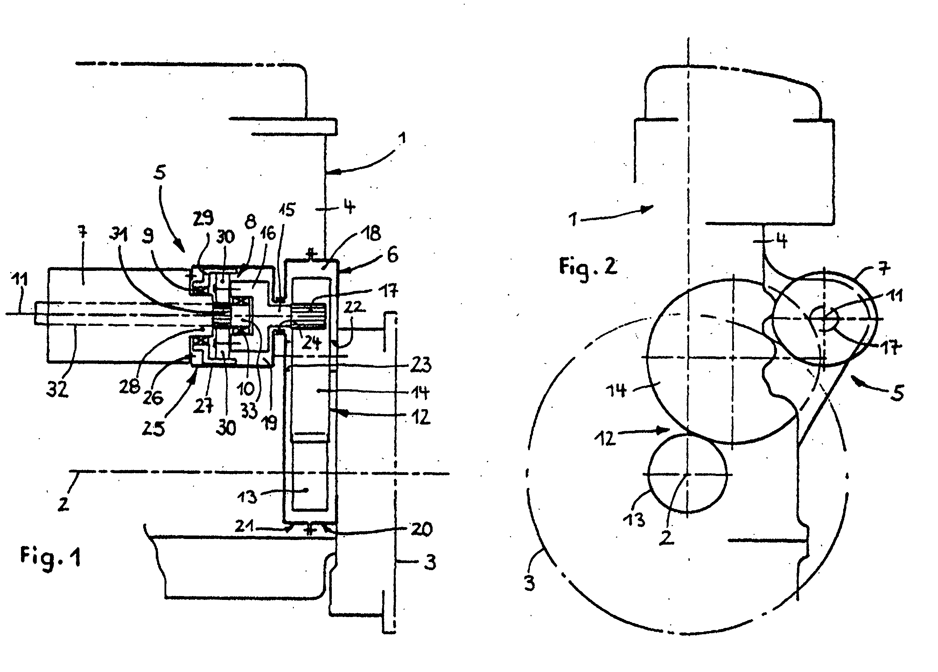

Nachstehend ist die erfindungsgemäße Lösung anhand eines in der Zeichnung dargestellten Ausführungsbeispiels noch näher erläutert. In der Zeichnung ist dieses Ausführungsbeispiel in Fig. 1 schematisch in Seitenansicht und in Fig. 2 schematisch in Vorderansicht gezeigt

In der Zeichnung sind mit 1 eine Brennkraftmaschine, bei der es sich vorzugsweise um einen Dieselmotor in einem Lastkraftwagen oder Omnibus handelt, mit 2 deren Kurbelwelle und mit 3 ein Schwungradgehäuse bezeichnet, das stirnseitig am Zylinderblock 4 der Brennkraftmaschine 1 befestigt ist und ein an der Kurbelwelle 2 angeschlossenes Schwungrad aufnimmt.

Mit 5 ist in seiner Gesamtheit ein erfindungsgemäßer Nebenaggregatemodul bezeichnet. Dieser weist ein seitlich außen an der Brennkraftmaschine 1 sowie rückseitig am Schwungradgehäuse 3 angeschlossenes Modulgehäuse 6 auf, in bzw. an dem eine sowohl als Anlasser als auch Generator betreibbare, gegebenenfalls auch als Antriebsquelle für andere/weitere Nebenaggregate der Brennkraftmaschine 1 dienende Elektromaschine 7 sowie axial davor ein Planetengetriebe 8 mit zwei Freilaufkupplungen 9, 10 koaxial längs einer zur Achse der Kurbelwelle 2 der Brennkraftmaschine 1 parallelen Zentralachse 11 angeordnet sind. Das Modulgehäuse 6 umgibt außerdem einen Zahnradtrieb 12, der die antriebsmäßige Verbindung zwischen der Kurbelwelle 2 der Brennkraftmaschine 1 und dem Planetengetriebe 8 herstellt. Dieser Zahnradtrieb 12 besteht aus zwei miteinander kämmenden Zahnrädern 13, 14 unterschiedlichen Durchmessers. Das durchmesserkleinere Zahnrad 13 sitzt drehfest auf der Kurbelwelle 2, das im Durchmesser etwa doppelt so große Zahnrad 14 dagegen ist oberhalb des ersten Zahnrades 13 etwas seitlich versetzt zu diesem angeordnet und innerhalb des Modulgehäuses 6 gelagert. Die Verbindung von diesem Zahnradtrieb 12 zum Planetengetriebe 8 wird durch ein auf der Welle 15 des Planetenradträgers 16 sitzendes Zahnrad 17 hergestellt, das mit dem durchmessergrößeren Zahnrad 14 des Zahnradgetriebes 12 in Eingriff steht.

Das sich rückseitig des Schwungradgehäuses 3 teilweise in dessen Projektionsschatten erstreckende Modulgehäuse 6 weist im dargestellten Fall zwei Kammern 18, 19 auf, wobei in der ersten Kammer 18 der Zahnradtrieb 12 untergebracht sind und die Verbindung zum Zahnrad 17 hergestellt ist, in der zweiten Kammer 19 dagegen das Planetengetriebe 8 sowie die beiden Freilaufkupplungen 9, 10 untergebracht sind. Das Modulgehäuse 6 ist durch mehrere Gehäuseteile gebildet, die so gestaltet sind, daß der Ein- bzw. Anbau der Elektromaschine 7, des Planetengetriebes 8, der Freilaufkupplungen 9, 10 sowie des Zahnrades 14 des Zahnradtriebs 12 einfach und schnell durchführbar und die Gehäuseteile selbst günstig miteinander verbindbar sind.

Im dargestellten Ausführungsbeispiel begrenzen zwei topfförmige Gehäuseteile 20, 21 die Kammer 18 des Modulgehäuses 6. Beide Gehäuseteile 20, 21 sind in einer Vertikalquertrennebene über Flansche und geeignete Verschraubungen miteinander verbunden. Das erste, vordere Gehäuseteil 20 ist dabei rückseitig am Schwungradgehäuse 3, gegebenenfalls auch an der Brennkraftmaschine 1 befestigt. Außerdem weisen beide Gehäuseteile 20, 21 zueinander fluchtende Lagerstellen 22, 23 für die Lagerung des zweiten Zahnrades 14 des Zahnradantriebes 12 auf. Das zweite Gehäuseteil 21 weist außerdem eine Durchtrittsöffnung 24 für die Lagefixierung eines weiteren Gehäuseteiles 25 an ihm sowie für die Hindurchführung der Welle 15 auf.

Das dritte Gehäuseteil 25 besitzt eine vordere Stirnwand, die zusammen mit einer hinteren Stirnwand 26 und einer im Querschnitt kreisringzylindrischer Außenwand 27 die zweite Kammer 19 begrenzt. Dabei ist das dritte Gehäuseteil 25 an der Rückseite des zweiten Gehäuseteils 21 angeflanscht.

An der hinteren Stirnwand 26 des dritten Gehäuseteils 25 ist die Elektromaschine 7 befestigt. Diese ragt mit einem stirnseitig vorspringenden Hals 28 in die zweite Kammer 19 des Modulgehäuses 6 hinein. Auf dem Hals 28 ist die erste Freilaufkupplung 9 angeordnet, die radial außen mit der Nabe am Hohlrad 29 des Planetengetriebes 8 zusammenwirkt. Das Hohlrad 29 ist innerhalb der zweiten Kammer 19 gelagert. Mit der Innenverzahnung des Hohlrades 29 stehen Planetenräder 30 in Eingriff, die am Planetenradträger 16 gelagert sind und außerdem mit einer Verzahnung 31 in Eingriff stehen, die an der koaxial zur Zentralachse 11 angeordneten Welle 32 der Elektromaschine 7 gegeben ist. Vor dieser Verzahnung 31 ist auf einem Ansatz 33 am freien Ende der Welle 32 der Elektromaschine 7 die zweite Freilaufkupplung 10 angeordnet, welche radial außen mit dem sie axial übergreifenden Planetenradträger 16 zusammenwirkt.

Die koaxial zur Zentralachse 11 angeordnete Welle 32 der Elektromaschine 6 kann über das jeweilige hintere Ende hinaus verlängert, also nach Art einer Durchtriebswelle ausgebildet sein und grundsätzlich das Anschlußorgan und die Antriebsquelle für weitere Nebenaggregate bilden. Dabei kann es sich um einen Luftpresser und/oder eine Lenkhilfepumpe und/oder eine Kühlmittelumwälzpumpe und/oder einen Klimakompressor und/oder eine hydrostatische Pumpe/Maschine zur Bestätigung von Arbeitsgerätschaften des Fahrzeugs handeln.

Der Elektromaschine 7 ist eine Steuer- und Regeleinrichtung zugeordnet, über die deren Wirkungsweise sowohl im Anlasser - als auch Generatorbetrieb managebar ist.

Im Anlasserbetrieb ist die Brennkraftmaschine 1 durch die Elektromaschine 7 über das Planetengetriebe 8, das Zahnrad 17 und den Zahnradtrieb 12; 13, 14 startbar. Dabei werden über die Verzahnung 31 an der Welle 32 der Elektromaschine 7 die Planetenräder 30 angetrieben, das Hohlrad 29 ist über den ersten Freilauf 9 festgehalten, der Planetenradträger 16 dreht sich mit einer Übersetzung von ca. i = 6 und das am freien Ende der Planetenradträgerwelle 15 sitzende Zahnrad 17 setzt mit einer weiteren Übersetzung von ca. i = 3,5 über den Zahnradtrieb 12; 13, 14 die Kurbelwelle 2 der Brennkraftmaschine 1 in Bewegung. Während eines Anlaßvorgangs ist somit eine Gesamtübersetzung von ca. i_{ges} = 21 wirksam. Dabei dreht während eines Anlaßvorgangs die Welle 32 bei gleicher Drehrichtung um einen Faktor von ca. 6 schneller als der Planetenradträger 16, so daß die zweite Freilaufkupplung 10 stets überholt wird und nicht klemmt.

Um die Brennkraftmaschine 1 starten zu können, ist ein relativ hohes Drehmoment erforderlich, so daß die erwähnte Gesamtübersetzung von besonderem Vorteil ist. Falls es sich bei der Brennkraftmaschine 1 um einen Dieselmotor handelt, springt dieser bereits bei einer Drehzahl von 200 bis 300 1/min an, was bedeutet, daß aufgrund dieser großen Übersetzung die zulässige Maximaldrehzahl der Elektromaschine 7 nicht überschritten wird. Sofort nach einem als wirksam bzw. erfolgt detektierten Start der Brennkraftmaschine 1 wird die Elektromaschine 7 von Anlasser - auf Generatorbetrieb umgeschaltet.

Während des Hochlaufen der Drehzahl der Brennkraftmaschine 1 bis Leerlaufdrehzahl fällt die Drehzahl der Elektromaschine 7 zunächst ab, bis bei einer Übersetzung i = 3,5 Gleichlauf besteht.

Im Generatorbetrieb muß dann bis zur Höchstdrehzahl der Brennkraftmaschine 1, im Fall eines Dieselmotors ca. 2000 1/min, die Elektromaschine 7 bei einer Übersetzung i = 3,5 mitlaufen. Während dieses Generatorbetriebes ist die Elektromaschine 7 demzufolge von der Kurbelwelle 2 der Brennkraftmaschine 1 her über den Zahnradtrieb 12; 13, 14, das Zahnrad 17 und das Planetengetriebe 8 angetrieben. Dabei treibt das Zahnrad 17 über die Welle 15 den Planetenradträger 16 an, die zweite Freilaufkupplung 10 klemmt und verblockt/kuppelt so die Welle 32 der Elektromaschine 7 mit dem Planetenradträger 16/Planetengetriebe 8, in welchem Fall sich die Planetenräder 30 nicht drehen und das Hohlrad 29 im gleichen Drehsinn und mit gleicher Drehzahl wie der Planetenradträger 16 bei nicht geklemmter erster Freilaufkupplung 9 dreht.

Im Gegensatz zu üblichen Starteranlagen ist mit der erfindungsgemäßen Lösung ein sehr komfortabler und geräuschfreier Übergang von Starterbetrieb zum Generatorbetrieb der Elektromaschine 7 möglich, so daß mit einer derartigen Einrichtung ein stop-and-go-Betrieb günstig durchführbar ist, auch mit einem Abstellen der Brennkraftmaschine 1 bei einem Ampelhalt oder im Falle eines Busses an Haltestellen. Ein Neustart der Brennkraftmaschine 1 ist problemlos möglich.

Mit der erfindungsgemäßen Lösung ist es ohne weiteres auch möglich, die Elektromaschine 7 leistungsmäßig so festzulegen bzw. zu dimensionieren, daß im Generatorbetrieb eine vergleichsweise hohe elektrische Überschußenergie erzeugbar ist, die dann auch über die Elektromaschine 7 als Anfahrunterstützung oder für kurzzeitige Fahrunterstützung heranziehbar ist. Die Übersetzungen müßten dann gegebenenfalls auch diesem Einsatzfall entsprechend angepaßt werden.

Abschließend bleibt zu erwähnen, daß sich die erfindungsgemäße Lösung auch dafür anbietet, an bestimmten Stellen des Modulgehäuses 6 weitere Nebenaggragate der Brennkraftmaschine 1 anzubauen und diese Nebenaggregate in Antriebsverbindung mit dem durchmessergrößeren Zahnrad 14 des Zahnradtriebes 12 zu bringen. Hierbei ist besonders an den Luftpresser, eine Lenkhilfepumpe, Kühlmittelpumpe etc. gedacht. Auf diese Möglichkeiten sei hier aber nicht näher eingegangen.

## Patentansprüche

1. Anordnung und antriebsmäßige Anbindung wenigstens eines Anlassers/Generators an einer Brennkraftmaschine, insbesondere Dieselmotor in einem Lastkraftwagen oder Omnibus, **gekennzeichnet durch** einen Nebenaggregatemodul (5) mit einem seitlich außen an der Brennkraftmaschine (1) sowie rückseitig am Schwungradgehäuse (3) angeschlossenen Modulgehäuse (6), in bzw. an dem eine sowohl als Anlasser als auch Generator betreibbare, gegebenenfalls auch als Antriebsquelle für andere -Nebenaggregate der Brennkraftmaschine (1) dienende Elektromaschine (7) sowie axial davor ein Planetengetriebe (8) mit zwei Freilaufkupplungen (9, 10) koaxial längs einer zur Achse der Kurbelwelle (2) der Brennkraftmaschine (1) parallelen Zentralachse (10) angeordnet sind, wobei das Modulgehäuse (6) außerdem einen Zahnradtrieb (12; 13, 14) aufnimmt, über den die antriebsmäßige Verbindung von der Kurbelwelle (2) der Brennkraftmaschine (1) zum Planetengetriebe (8) hergestellt ist.

2. Anordnung und antriebsmäßige Anbindung wenigstens eines Anlassers/Generators an einer Brennkraftmaschine nach Anspruch 1, **dadurch gekennzeichnet, daß** der Zahradtrieb (12) aus zwei miteinander kämmenden Zahnrädern (13, 14) unterschiedlichen Durchmessers besteht, wobei das durchmesserkleinere Zahnrad (13) drehfest auf der Kurbelwelle (2) der Brennkraftmaschine (1) sitzt und das im Durchmesser etwa doppelt so große Zahnrad (14) oberhalb und seitlich versetzt zum Zahnrad (13) angeordnet und innerhalb des Modulgehäuses (6) gelagert ist, und daß die Antriebsverbindung von diesem durchmessergrößeren Zahnrad (14) zum Planetengetriebe (8) durch ein mit ihm in Eingriff stehendes und am freien Ende der Welle (15) des Planetenradträgers (16) angeordnetes Zahnrad (17) hergestellt ist.

3. Anordnung und antriebsmäßige Anbindung wenigstens eines Anlassers/Generators an einer Brennkraftmaschine nach den Ansprüchen 1 und 2, **dadurch gekennzeichnet, daß** das Modulgehäuse (6) zwei Kammern (18, 19) aufweist, wobei in der ersten Kammer (18) der Zahnradtrieb (12; 13, 14) untergebracht und die getriebliche Verbindung zum Planetengetriebe (8) über das Zahnrad (17) auf der Welle (15) des Planetenradträgers (16) hergestellt ist, und wobei in der zweiten Kammer (19) das Planetengetriebe (8) und die beiden Freilaufkupplungen (9, 10) untergebracht sind.

4. Anordnung und antriebsmäßige Anbindung wenigstens eines Anlassers/Generators an einer Brennkraftmaschine nach Anspruch 3, **dadurch gekennzeichnet, daß** das Modulgehäuse (6) durch mehrere Gehäuseteile (20, 21, 25) gebildet ist, wobei die Trenn- bzw. Verbindungsstellen so gelegt und die einzelnen Gehäuseteile so gestaltet sind, daß ein einfacher Einbau des Planetengetriebes (8), der Freilaufkupplungen (9, 10) und des durchmessergrößeren Zahnrades (14) des Zahnradtriebes (12) sowie ein einfacher Anbau der Elektromaschine (7), gegebenenfalls weiterer Nebenaggregate möglich ist und auch die Gehäuseteile miteinander günstig verbindbar sind.

5. Anordnung und antriebsmäßige Anbindung wenigstens eines Anlassers/Generators an einer Brennkraftmaschine nach Anspruch 4, **dadurch gekennzeichnet, daß** die erste Kammer (18) des Modulgehäuses (6) durch zwei topfförmige Gehäuseteile (20, 21) begrenzt ist, die in einer Vertikalquertrennebene über Flansche und geeignete Verschraubungen miteinander verbunden sind, daß das erste, vordere Gehäuseteil (20) rückseitig am Schwungradgehäuse (3), gegebenenfalls auch am Zylinderblock (4) der Brennkraftmaschine (1) befestigt ist, daß beide Gehäuseteile (20, 21) zueinander fluchtende Lagerstellen (22, 23) für die Lagerung des durchmessergrößeren Zahnrades (14) des Zahnradtriebes (12) aufweisen, und daß das zweite, hintere Gehäuseteil (21) eine Durchtrittsöffnung (24) für die Lagefixierung eines dritten, das Planetengetriebe (8) und die beiden Freilaufkupplungen (9, 10) aufnehmenden sowie als Anschluß- und Tragorgan für die Elektromaschine (7) fungierenden Gehäuseteils (25) sowie zur Hindurchführung der Welle (15) des Planetenradträgers (16) mit dem an ihrem äußeren freien Ende angeordneten Zahnrad (17) aufweist, das mit dem durchmessergrößeren Zahnrad (14) des Zahnradtriebes (12) in Eingriff steht

6. Anordnung und antriebsmäßige Anbindung wenigstens eines Anlassers/Generators an einer Brennkraftmaschine nach Anspruch 5, **dadurch gekennzeichnet, daß** das dritte Gehäuseteil (25) eine vordere Stirnwand besitzt, die zusammen mit einer hinteren Stirnwand (26) und einer im Querschnitt kreiszylindrischen Außenwand (27) die zweite Kammer (19) des Modulgehäuses (6) begrenzt, wobei das dritte Gehäuseteil (25) an der Rückseite des zweiten Gehäuseteils (21) angeflanscht und an der hinteren Stirnwand (26) des dritten Gehäuseteils (25) die Elektromaschine (7) befestigt ist.

7. Anordnung und antriebsmäßige Anbindung wenigstens eines Anlassers/Generators an einer Brennkraftmaschine nach einem oder mehreren der vorhergehenden Ansprüche, **dadurch gekennzeichnet, daß** die Elektromaschine (7) mit einem stirnseitig vorspringenden Hals (28) in die zweite Kammer (19) im dritten Gehäuseteil (25) des Modulgehäuses (6) hineinragt, daß auf dem Hals (28) die erste Freilaufkupplung (9) angeordnet ist, die wiederum radial außen mit dem Hohlrad (29) des Planetengetriebes (8) zusammenwirkt, welches Hohlrad (29) innerhalb der zweiten Kammer (19) im dritten Gehäuseteil (25) gelagert ist und mit dessen Innenverzahnung Planetenräder (30) kämmen, die am Planetenradträger (16) gelagert sind und außerdem mit einer Verzahnung (31) an der Welle (32) der Elektromaschine (7) in Triebverbindung stehen, und daß am freien Ende der Welle (32) auf einem Ansatz (33) vor der Verzahnung (31) die zweite Freilaufkupplung (10) angeordnet ist, welche radial außen mit dem Planetenradträger (16) zusammenwirkt.

8. Anordnung und antriebsmäßige Anbindung wenigstens eines Anlassers/Generators an einer Brennkraftmaschine nach einem oder mehreren der vorhergehenden Ansprüche, **dadurch gekennzeichnet, daß** die koaxial zur Zentralachse (11) angeordnete Welle (32) der Elektromaschine (7) über das jeweilige hintere Ende hinaus verlängert ist und als Antriebsorgan für ein weiteres Nebenaggregat fungiert, beispielsweise eine Lenkhilfepumpe und/oder eine Kühlmittelumwälzpumpe und/oder einen Klimakompressor und/oder eine hydrostatische Pumpe/Maschine und/oder einen Luftpresser.

9. Anordnung und antriebsmäßige Anbindung wenigstens eines Anlassers/Generators an einer Brennkraftmaschine nach einem oder mehreren der vorhergehenden Ansprüche, **dadurch gekennzeichnet, daß** die Brennkraftmaschine (1) durch die Elektromaschine (7) im Anlasserbetrieb über das Planetengetriebe (8), das Zahnrad (17) und den Zahnradtrieb (12; 13, 14) startbar ist, wobei Ober die Verzahnung (31) an der Welle (32) der Elektromaschine (7) die Planetenräder (30) angetrieben werden, dabei das Hohlrad (29) über den ersten Freilauf (9) abgestützt festgehalten ist, sich der Planetenradträger (16) mit einer Übersetzung ca. i = 6 dreht und das am freien Ende der Welle (15) des Planetenradträgers (16) angeordnete Zahnrad (17) mit einer weiteren Übersetzung von ca. i = 3, 5 über den Zahnradtrieb (12; 13, 14) die Kurbelwelle (2) der Brennkraftmaschine (1) in Bewegung setzt, mithin beim Anlaßvorgang eine Gesamtübersetzung ca. i_{ges} = 21 wirksam ist, und wobei während eines Anlaßvorganges die Welle (32) der Elektromaschine (7) bei gleicher Drehrichtung um den Faktor ca. 6 schneller als der Planetenradträger (16) dreht, mithin die zweite Freilaufkupplung (10) stets überholt wird und nicht klemmt.

10. Anordnung und antriebsmäßige Anbindung wenigstens eines Anlassers/Generators an einer Brennkraftmaschine nach einem oder mehreren der Ansprüche 1 bis 8, **dadurch gekennzeichnet, daß** die Elektromaschine (7) im Generatorbetrieb von der Kurbelwelle (2) der Brennkraftmaschine (1) her über den Zahnradtrieb (12; 13, 14), das Zahnrad (17) und das Planetengetriebe (8) antreibbar ist, wobei das Zahnrad (17) den Planetenradträger (16) treibt, die zweite Freilaufkupplung (10) klemmt und so die Welle (32) der Elektromaschine (7) mit dem Planetenradträger (16) gekuppelt ist, in welchem Fall die Planetenräder (30) sich nicht drehen und das Hohlrad (29) im gleichen Drehsinn sowie mit gleicher Drehzahl wie der Planetenradträger (16) bei nicht geklemmter erster Freilaufkupplung (9) dreht und im Generatorbetrieb eine Übersetzung von ca. i = 3, 5 wirksam ist.

## Claims

1. Arrangement and drive connection of at least one starter/alternator to an internal combustion engine, particularly a diesel engine in a truck or bus/coach, **characterised by** a secondary unit module (5) with a module housing (6) connected laterally to the outside of the internal combustion engine (1) and to the rear side of the flywheel housing (3), in or on which module housing (6) an electric machine (7) which can be used both as a starter and as an alternator and, if necessary, also as a drive unit for other secondary units of the internal combustion engine (1) and, axially before said electric machine (7), a planetary gear set (8) with two freewheel clutches (9, 10) coaxially arranged in longitudinal direction relative to a central axis (10) running parallel to the axis of the crankshaft (2) of the internal combustion engine (1) are arranged, said module housing (6) also integrating a gear drive (12; 13, 14) establishing the drive connection from the crankshaft (2) of the internal combustion engine (1) to the planetary gear set (8).

2. Arrangement and drive connection of at least one starter/alternator to an internal combustion engine according to Claim 1, **characterised in that** the gear drive (12) consists of two gears (13, 14) which are of different diameter and mesh with each other, whereby the gear (13) with the smaller diameter sits firmly on the crankshaft (2) of the internal combustion engine (1) and the other gear (14), whose diameter is approximately twice as large, is arranged above and offset to one side relative to the first gear (13) and is supported in bearings inside the module housing (6), and that the drive connection from this gear (14) with the larger diameter to the planetary gear set (8) is established via a gear (17) which is in mesh with said gear (14) and is arranged at the free end of the shaft (15) of the planet gear carrier (16).

3. Arrangement and drive connection of at least one starter/alternator to an internal combustion engine according to the Claims 1 and 2, **characterised in that** the module housing (6) has two chambers (18, 19), whereby in the first chamber (18) the gear drive (12; 13, 14) is located and the gear connection to the planetary gear (8) is established via the gear (17) on the shaft (15) of the planet gear carrier (16), and the second chamber (19) houses the planetary gear set (8) and the two freewheel clutches (9, 10).

4. Arrangement and drive connection of at least one starter/alternator to an internal combustion engine according to Claim 3, **characterised in that** the module housing (6) is composed of several housing parts (20, 21, 25), whereby the interface and connecting points are arranged and the individual housing parts are designed in such a way that easy installation of the planetary gear set (8), of the freewheel clutches (9, 10) and of the larger-diameter gear (14) of the gear drive (12) and easy attachment of the electric machine (7) and, if necessary, of further secondary units are possible and the housing parts can be easily connected with each other.

5. Arrangement and drive connection of at least one starter/alternator to an internal combustion engine according to Claim 4, **characterised in that** the first chamber (18) of the module housing (6) is limited by two pot-shaped housing parts (20, 21) connected with each other in a vertical transverse separating plane via flanges and suitable bolted connections, that the first, front housing part (20) is fastened to the rear side of the flywheel housing (3) and, if necessary, also to the cylinder block (4) of the internal combustion engine (1), that both housing parts (20, 21) are provided with bearing points (22, 23), aligned to each other, for supporting the larger-diameter gear (14) of the gear drive (12), and that the second, rear housing part (21) features a passage orifice (24) for fastening a third, housing part (25) integrating the planetary gear (8) and the two freewheel clutches (9, 10) and acting as a connecting and supporting organ for the electric machine (7) and as a passage for the shaft (15) of the planet gear carrier (16) with the gear (17) arranged at the outer free end of said shaft (15) and meshing with the larger-diameter gear (14) of the gear drive (12).

6. Arrangement and drive connection of at least one starter/alternator to an internal combustion engine according to Claim 5, **characterised in that** the third housing part (25) has a front end wall which, together with a rear end wall (26) and an outer wall (27) of circular cylindrical cross-section, limits the second chamber (19) of the module housing (6), the third housing part (25) being flanged on to the rear side of the second housing part (21) and the electric machine (7) being fastened to the rear end wall (26) of the third housing part (25).

7. Arrangement and drive connection of at least one starter/alternator to an internal combustion engine according to one or several of the foregoing Claims, **characterised in that** the electric machine (7) has a protruding neck (28) on the front end which penetrates into the second chamber (19) in the third housing part (25) of the module housing (6), that the first freewheel clutch (9) is arranged on the neck (28) and, on the outside, interacts radially with the ring gear (29) of the planetary gear (8), which ring gear (29) is mounted within the second chamber (19) in the third housing part (25), its internal toothing meshing with planet gears (30) supported on the planet gear carrier (16) and also being in a drive connection with toothing (31) provided on the shaft (32) of the electric machine (7), and that the second freewheel clutch (10) is arranged on a protrusion (33) before the toothing (31) at the free end of the shaft (32) and, on the outside, acts radially together with the planet gear carrier (16).

8. Arrangement and drive connection of at least one starter/alternator to an internal combustion engine according to one or several of the foregoing Claims, **characterised in that** the shaft (32) of the electric machine (7) is coaxially arranged relative to the central axis (11), extends beyond each rear end and acts as drive organ for another secondary unit, eg a steering booster pump and/or a coolant circulation pump and/or and/or an air-conditioner compressor and/or a hydrostatic pump/machine and/or an air compressor.

9. Arrangement and drive connection of at least one starter/alternator to an internal combustion engine according to one or several of the foregoing Claims, **characterised in that** the internal combustion engine (1) can be started by the electric machine (7) in the starter operating mode via the planetary gear (8), the gear (17) and the gear drive (12; 13, 14), whereby the planet gears (30) are driven via the toothing (31) on the shaft (32) of the electric machine (7), the ring gear (29) is thereby held and supported via the first freewheel clutch (9), the planet gear carrier (16) rotates with a transmission ratio of approx. i=6 and the gear (17) sitting on the free end of the shaft (15) of the planet gear carrier (16) sets in motion the crankshaft (2) of the internal combustion engine (1) with a further transmission ratio of approx. i=3.5 via the gear drive (12; 13, 14), a total transmission ratio of approx. iₜₒₜ=21 being effective in the starting procedure during which the shaft (32) of the electric machine (7) rotates in the same direction and approx. 6 times faster than the planet gear carrier (16), so that the second freewheel clutch (10) is always overtaken and does not jam.

10. Arrangement and drive connection of at least one starter/alternator to an internal combustion engine according to one or several of the Claims 1 to 8, **characterised in that** in the alternator operating mode the electric machine (7) can be driven from the crankshaft (2) of the internal combustion engine (1) via the gear drive (12; 13, 14), the gear (17) and the planetary gear (8), whereby the gear (17) drives the planet gear carrier (16), the second freewheel clutch (10) jams and, consequently, the shaft (32) of the electric machine (7) is engaged with the planet gear carrier (16), in which case the planet gears (30) do not rotate and the ring gear (29) rotates in the same direction and at the same speed as the planet gear carrier (16) if the first freewheel clutch (9) is not jammed and a transmission ratio of approx. i=3.5 is effective in the alternator operating mode.

## Revendications

1. Disposition et liaison par entraînement d'au moins un démarreur/alternateur sur un moteur à combustion interne, en particulier sur un moteur diesel dans un camion ou bus/car, **caractérisée par** un module d'organes auxiliaires (5) avec un carter de module relié latéralement et extérieurement au moteur à combustion interne (1) et sur la face arrière au carter du volant (3), dans ou sur lequel sont disposés une dynamo (7) fonctionnant à la fois comme démarreur et comme alternateur, et, le cas échéant, servant de source d'entraînement pour d'autres organes auxiliaires du moteur à combustion interne, et devant en position axiale un train planétaire (8) avec deux embrayages à roue libre (9, 10), en position coaxiale le long d'un pont central (10) parallèle à l'axe du vilebrequin (2) du moteur à combustion interne (1), auquel cas le carter du module (6) se compose également d'un train d'engrenages (12, 13, 14) à partir duquel est établie la liaison par entraînement du vilebrequin (2) du moteur à combustion interne (1) au train planétaire (8).

2. Disposition et liaison par entraînement d'au moins un démarreur/alternateur sur un moteur à combustion interne selon la revendication 1, **caractérisée en ce que** le train d'engrenages (12) est constitué de deux pignons enchevêtrés entre eux (13, 14) et d'un diamètre différent, auquel cas le pignon de petit diamètre (13) est monté de manière fixe sur le vilebrequin (2) du moteur à combustion interne (1) et le deuxième pignon d'un diamètre deux fois gros est disposé de manière décalée au-dessus et latéralement par rapport au petit pignon (13) et est logé dans le carter du module (6), et **en ce que** la liaison par entraînement de ce pignon à diamètre plus gros (14) au train planétaire (8) est établie par le biais d'un pignon (17) fixe relié à lui et disposé à l'extrémité libre de l'arbre (15) du porte-satellites (16).

3. Disposition et liaison par entraînement d'au moins un démarreur/alternateur sur un moteur à combustion interne selon les revendications 1 et 2, **caractérisée en ce que** le carter du module (6) se compose de deux compartiments (18, 19), auquel cas le train d'engrenages (12, 13, 14) est logé dans le premier compartiment (18) et la liaison de la boîte de vitesses au train planétaire (8) est établie par le biais du pignon (17) monté sur l'arbre (15) du porte-satellites (16), et auquel cas le train planétaire (8) et les deux embrayages à roue libre sont logés dans le deuxième compartiment (19).

4. Disposition et liaison par entraînement d'au moins un démarreur/alternateur sur un moteur à combustion interne selon la revendication 3, **caractérisée en ce que** le carter de module (6) est formé de plusieurs pièces de carter (20, 21, 25), auquel cas les points de séparation et d'assemblage sont disposés et les pièces du carter individuelles conçues de telle manière qu'un montage simple du train planétaire (8), des embrayages à roue libre (9, 10) et du pignon de gros diamètre (14) du train d'engrenages (12) ainsi que le montage simple d'une dynamo (7) et, le cas échéant, d'organes auxiliaires supplémentaires soient possibles et que les pièces du carter soient facilement assemblables entre elles.

5. Disposition et liaison par entraînement d'au moins un démarreur/alternateur sur un moteur à combustion interne selon la revendication 4, **caractérisée en ce que** le premier compartiment (18) du carter du module (6) est délimité par deux pièces de carter en forme de pot reliées entre elles dans un plan de joint vertical en diagonal par le biais de brides et de liaisons vissées adéquates, **en ce que** la première pièce de carter avant (20) est fixée sur la face arrière du carter du volant (3), le cas échéant également au bloc cylindres (4) du moteur à combustion interne, **en ce que** les deux pièces de carter (20, 21) présentent des points de fixation (22, 23) à l'alignement, permettant la pose du pignon à gros diamètre (14) du train d'engrenages (12), et **en ce que** la deuxième pièce de carter arrière (21) présente une ouverture pour fixer une troisième pièce de carter (25) pouvant accueillir le train planétaire (8) et les deux embrayages à roue libre (9, 10) et servir d'organe de liaison et de support pour la dynamo (7) pour entraîner l'arbre (15) du porte-satellites (16) avec le pignon (17) disposé à son extrémité extérieure libre, qui est relié au pignon (14) de gros diamètre du train d'engrenages (12).

6. Disposition et liaison par entraînement d'au moins un démarreur/alternateur sur un moteur à combustion interne selon la revendication 5, **caractérisée en ce que** la troisième pièce de carter (25) possède une paroi avant qui, conjointement avec une paroi arrière (26) et une paroi extérieure cylindrique en section (27), délimite le deuxième compartiment (19), auquel cas la troisième pièce de carter (25) est bridée à la face arrière de la deuxième pièce de carter (21) et la dynamo est fixée à la paroi arrière (26) de la troisième pièce de carter (25).

7. Disposition et liaison par entraînement d'au moins un démarreur/alternateur sur un moteur à combustion interne selon une ou plusieurs revendications énoncées précédemment, **caractérisée en ce que** la dynamo (7) avec un collet à avancée (28) sur le devant est insérée dans le deuxième compartiment (19) de la troisième pièce de carter (25) logée dans le carter du module (6), **en ce que** sur le collet (28) se trouve le premier embrayage à roue libre (9), lequel est, à son tour, entraîné de manière radiale de l'extérieur avec la couronne (29) du train d'engrenages (8). Cette couronne (29) est placée dans le deuxième compartiment (19) de la troisième pièce de carter (25) et avec les dents intérieures de laquelle les satellites (30) s'engrènent. Ceux-ci sont logés sur le porte-satellites (16) et sont reliés par un endentement (31) à l'arbre (32) de la dynamo (7). Egalement **caractérisée en ce que** le deuxième embrayage à roue libre (10) est disposé au niveau de l'extrémité libre de l'arbre (32) sur un support (33) en amont de l'endentement (31) et qu'il est entraîné de manière radiale de l'extérieur avec le porte-satellites (16).

8. Disposition et liaison par entraînement d'au moins un démarreur/alternateur sur un moteur à combustion interne selon une ou plusieurs revendications précédentes, **caractérisée en ce que** l'arbre (32) de la dynamo (7) disposé coaxialement par rapport au pont central (11) est prolongé à partir de l'extrémité arrière et sert d'organe de transmission pour un organe auxiliaire supplémentaire, par exemple une pompe de direction auxiliaire et/ou une pompe de recirculation du liquide de refroidissement et/ou un compresseur pour climatiseur et/ou une pompe/moteur hydrostatique et/ou un compresseur d'air.

9. Disposition et liaison par entraînement d'au moins un démarreur/alternateur sur un moteur à combustion interne selon une ou plusieurs revendications énoncées précédemment, **caractérisée en ce que** le moteur à combustion interne (1) peut être démarré en mode démarreur par le biais de la dynamo (7) grâce au train planétaire (8), au pignon (17) et au train d'engrenages (12, 13, 14), auquel cas les satellites (30) sont entraînés par l'endentement (31) sur l'arbre (32) de la dynamo (7) et, à cette occasion, la couronne (29) est maintenue en place par la première roue libre (9), le porte-satellites tourne avec un rapport d'env. i = 6 et le pignon (17) disposé à l'extrémité libre de l'arbre (15) du porte-satellites (16) met en mouvement le vilebrequin (2) du moteur à combustion interne (1) par le biais du train d'engrenages (12, 13, 14) avec un rapport supplémentaire d'env. i = 3,5, ce qui permet d'obtenir une démultiplication totale d'env. iₜₒₜ = 21 lors du démarrage, et auquel cas l'arbre (32) de la dynamo (7) tourne lors du démarrage plus vite avec un facteur d'env. 6 par rapport au porte-satellites (16) pour un même sens de rotation, et par conséquent le deuxième embrayage à roue libre (10) est toujours dépassé et ne se bloque pas.

10. Disposition et liaison par entraînement d'au moins un démarreur/alternateur sur un moteur à combustion interne selon une ou plusieurs revendications de 1 à 8, **caractérisée en ce que** la dynamo (7) peut être entraînée comme alternateur à partir du vilebrequin (2) du moteur à combustion interne (1) par le biais du train d'engrenages (12, 13, 14), du pignon (17) et du train planétaire (8), auquel cas le pignon (17) entraîne le porte-satellites (16), le deuxième embrayage à roue libre (10) se bloque et ainsi l'arbre (32) de la dynamo (7) est accouplé au porte-satellites, auquel cas les satellites (30) ne tournent plus et la couronne (29) tourne dans le même sens de rotation et à la même vitesse de rotation que le porte-satellites (16) lorsque le premier embrayage à roue libre ne bloque pas et du fait qu'en mode alternateur, un rapport d'env. i = 3,5 est suffisant.
